# EUROPÄISCHE PATENTANMELDUNG

(11) **EP 1 429 048 A1**
(43) Veröffentlichungstag der Anmeldung: **16.06.2004**
(21) Anmeldenummer: 03023051.0
(22) Anmeldetag: 22.12.2000
(51) Int. Cl.: F16H 1/28, F16F 15/124, B25J 9/10, E05F 11/48

(54) **Verstellvorrichtung**

(30) Priorität: 28.12.1999 DE 19963486; 27.01.2000 DE 10003350; 28.04.2000 DE 10020901; 27.06.2000 DE 10030321; 19.12.2000 DE 10063467
(62) Teilanmeldung aus: 00987439.7
(71) Anmelder: Diro GmbH & Co. KG, 38471 Rühen-Brechtorf (DE)
(72) Erfinder: Tomczyk, Hubert, 40237 Düsseldorf (DE)
(74) Vertreter: Gerstein, Hans Joachim, Dipl.-Ing.

(57) **Zusammenfassung**

Die Erfindung betriff einer Verstellvorrichtung, mit einem ersten Verstellzahnrad (1001) und einem zweiten Verstellzahnrad (1002),wobei das erste Verstellzahnrad (1001) mindestens einen ersten radial äußeren Kegelverzahnungsbereich (1004) und einen ersten radial inneren Kegelverzahnungsbereich (1005) aufweist und das zweite Verstellzahnrad (1002) mindestens einen zweiten radial äußeren Kegelverzahnungsbereich (1006) und einen zweiten radial inneren Kegelverzahnungsbereich (1007) aufweist, einer Antriebswelle (1003) mit einer Antriebskegelverzahnung (1014), die in Eingriff mit dem ersten und zweiten radial äußeren Kegelverzahnungsbereich (1004, 1006) der Verstellzahnräder (1001, 1002) ist, und
einer Abtriebswelle (1011), die konzentrisch zu den Verstellzahnrädern (1001, 1002) angeordnet ist und radial nach außen abstehende Stifte (1008) aufweist, auf denen mindestens zwei Umlaufzahnräder (1010 a-f) drehbar auf Stiften (1008) gelagert sind, wobei die Umlaufzahnräder (1010 a-f) Umlaufkegelverzahnungen (1009) aufweisen, die mit den radial inneren Kegelverzahnungsbereichen (1005, 1007) in Eingriff sind.
Aufgabe der Erindung ist es, eine Verstellvorrichtung zu schaffen, die mit relativ geringem Aufwand eine genaue und dauerhafte Positionierbarkeit gewährleistet. Erfindungsgemäß wird diese Aufgabe dadurch gelöst, dass
die ersten Kegelverzahnungsbereiche (1004, 1005) unterschiedliche Zähnezahlen und die zweiten Kegelverzahnungsbereiche (1006, 1007) gleiche Zähnezahlen aufweisen und die radial inneren oder radial äußeren Kegelverzahnungsbereiche (1005, 1007; 1004, 1006) gleiche Zähnezahlen aufweisen und
der zweite radial innere Kegelverzahnungsbereich (1007) und der zweite radial äußere Kegelverzahnungsbereich (1006) als eine einheitliche zweite Kegelverzahnung ausgebildet sind.

## Beschreibung

Die Erfindung bezieht auf eine Verstellvorrichtung zum Verstellen eines zweiten Teiles gegenüber einem ersten Teil. Derartige Verstellvorrichtungen werden insbesondere zum Verstellen von Gelenkteilen wie zum Beispiel Robotergelenkteilen, einer Sitzlehne, einer Seiltrommel eines Seilzuges oder als Untersetzungsgetriebe zum Beispiel von Turbinen verwendet.

Bei der Verstellung eines Gelenkteiles gegenüber einem anderen Gelenkteil, insbesondere von Gelenkteilen an einem Roboterarm, ist insbesondere eine gute Positionierbarkeit und drehmomentfeste Bewegung der Gelenkteile zueinander erforderlich. Hierzu werden derzeit unter anderem Schrittmotoren eingesetzt, die eine exakte Verstellbarkeit der Gelenkteile zueinander gewährleisten, oder zum Beispiel Elektromotoren mit einer hohen Untersetzung.

Bei Verwendung von Motoren, wie zum Beispiel Elektromotoren, mit höheren Drehzahlen kann die erforderliche hohe Untersetzung beispielsweise durch Getriebe mit elastischem Zahnkranz (Harmonic-Drive-Getriebe) verwirklicht werden. Bei diesen als Getriebe wirkenden Verstellungsvorrichtungen sind zwei innenverzahnte Zahnräder mit unterschiedlicher Zähnezahl und ein in den innenverzahnten Zahnrädern vorgesehenes außenverzahntes, elastisches Zahnrad vorgesehen, das eine nicht runde, zum Beispiel elliptische Form aufweist und beim Drehen so verformt wird, dass seine Außenzähne nacheinander in die Zahnlücken der innenverzahnten Zahnräder eingedrückt werden, wodurch eine relative Winkelverstellung erreicht wird, bei der die Zähne des außenverzahnten elastischen Zahnrades ständig im Eingriff mit den Innenverzahnungen sind. Der Unterschied der Zähnezahlen der innenverzahnten Zahnräder beträgt dabei ≥ 2. Zum Erreichen großer Untersetzu n-gen sind große Zähnezahlen notwendig, wozu hochelastische, teure und reibungsbeständige Materialien benötigt werden.

Sitzlehnenverstellvorrichtungen werden insbesondere für Kraftfahrzeugsitze verwendet, um die Sitzlehnenneigung in einer von dem Benutzer ausgewählten Position einstellen zu können. Für derartige Sitzlehnenverstellvorrichtungen sind insbesondere Drehverstellungen mit Exzenterantrieb bekannt. Hierbei ist ein außenverzahntes Zahnrad mit kleinerem Durchmesser und kleinerer Zähnezahl in einem innenverzahnten Zahnrad mit größerem Durchmesser und größerer Zähnezahl angebracht, wobei das außenverzahnte Zahnrad mit Hilfe einer Exzenterachse ständig mit dem größeren, äußeren Zahnrad fest verzahnt bleibt und bei Drehung der Exzenterachse zu einer relativen Winkelverstellung führt.

Derartige Sitzlehnenverstellvorrichtungen mit Exzenterantrieb erlauben im allgemeinen lediglich eine Bedienung mit relativ hohen Drehmomenten. Weiterhin wird bei der Sitzlehnenverstellung die Sitzlehne nicht nur gedreht oder geklappt, sondern aufgrund des exzentrischen Antriebes in einer Taumelbewegung geführt.

Die DE 197 29 562 A1 zeigt eine Sitzlehnenverstellung für einen Kraftfahrzeugsitz, bei der die Verstellung der Lehne durch exzentrisches Verdrehen eines Zahnrades in einem Zahnkranz durch Verschieben eines Keilpaares in einem von einem Gleitlager gebildeten Spalt erfolgt. Zur Verringerung der erforderlichen Verstelldrehmomente sind die Gleitflächen mit einem Gleitlack und einem eine plastische Verformung der Gleitflächen bewirkenden Additiv versehen.

Durch eine derartige Schmierung kann zwar eine gewisse Verringerung von Reibungskräften und dadurch des erforderlichen Drehmomentes erreicht werden, der hierbei erzielte Aufwand ist jedoch erheblich und führt zu hohen Fertigungskosten. Weiterhin ist eine entsprechend aufwendige Abdichtung der geschmierten Gleitflächen gegenüber Staub und Feuchtigkeit notwendig. Auch bei guter Schmierung sind weiterhin relativ hohe Drehmomente notwendig, wobei ebenfalls eine exzentrische Verstellung der Sitzlehne entlang einer Taumelbahn erfolgt.

Seilzugverstellvorrichtungen ermöglichen ein stufenloses Öffnen und Schließen zum Beispiel einer Fensterscheibe oder eines Schiebedachs eines Kraftfahrzeugs. Hierfür sind insbesondere Lösungen mit Schneckengetrieben bekannt. Ein Schneckengetriebe ermöglicht eine hohe Drehzahlreduktion, so dass schnelllaufende, klein bauende Elektromotoren verwendet werden können. Aufgrund des Selbsthemmungseffektes des Schneckengetriebes kann eine Verstellung des eingestellten Seilzuges bei ausgeschaltetem Motor wirksam verhindert werden. Schneckengetriebe weisen weiterhin den Vorteil auf, dass eine hohe Untersetzung mit nur einer Stufe ermöglicht wird, so dass allzu aufwendige, mehrstufige Getriebekonstruktionen nicht erforderlich sind.

Nachteilig an Schneckengetrieben ist jedoch die relativ große Reibung bei einem relativ niedrigen Wirkungsgrad von zum Beispiel 60 %. Hierdurch wird ein Elektromotor mit einer größeren Leistung und die Verwendung von reibungsbeständigen, teuren Materialien für das Schneckenrad erforderlich. Bei hohen Belastungen und hohen Außentemperaturen kann zudem eine große Wärmebelastung des Materials des Schneckenrades auftreten, so dass als Material insbesondere abriebfeste und wärmebeständige Kunststoffe verwendet werden, die dementsprechend kostenaufwendig sind.

Die US-A-5,807,202 zeigt ein Verteilergetriebe für Helikopter, mit dem es ermöglicht wird, die Drehgeschwindigkeiten einer Antriebswelle bei der Übertragung auf eine Abtriebswelle zu verändern. Angetriebene Antriebsräder greifen dabei in Tellerräder ein und treiben diese an. Von innenliegenden Umlaufrädern wird aufgrund der verringerten Umfangsgeschwindigkeit eine verringerte Drehzahl an die Abtriebswelle abgegeben, jedoch sind die Antriebsräder und Umlaufräder als separate Bauteile ausgebildet.

Der Erfindung liegt die Aufgabe zugrunde, gegenüber dem Stand der Technik Verbesserung zu schaffen und insbesondere eine Verstellvorrichtung zu schaffen, die mit relativ geringem Aufwand eine genaue und dauerhafte Positionierbarkeit gewährleistet. Hierbei soll vorzugsweise eine feste Klemmung oder Selbstblockade der Teile bei einer hohen Untersetzung und möglichst geringer Reibung gewährleistet sein. Die erfindungsgemäße Verstellvorrichtung soll vorzugsweise mit einfachen Materialien und mit einer einfachen und kostengünstigen Herstellung verwirklicht werden können und eine kleine Dimensionierung und geringe Masse ermöglichen.

Diese Aufgabe wird durch eine Verstellvorrichtung mit den Merkmalen des Anspruchs 1 gelöst. Die Unteransprüche beschreiben bevorzugte Ausführungsformen.

Der Erfindung liegt der Gedanke zugrunde, zwei miteinander gekoppelte Zahnradsysteme zu schaffen, wobei jedes Zahnradsystem jeweils ein Verstellzahnrad mit Innenverzahnung oder Kegelverzahnung und hierin umlaufende Umlaufzahnräder aufweist, wobei zwischen den Systemen ein Unterschied in den Zähnezahlen vorliegt. Dies kann sowohl mit einem Zahnradsystem mit Innen- und Außenzahnrädern als auch in einem Zahnradsystem mit Kegelverzahnungen verwirklicht werden. Als erläuterndes Beispiel wird die Verstellvorrichtung auch mit Innen- und Außenzahnrädern beschrieben.

Bei der Verstellvorrichtung mit Innen- und Außenzahnrädern wird eine relative Verstellung der Verstellzahnräder mit Innenverzahnungen erreicht, indem diese über gemeinsame Umlaufzahnräder verbunden sind, die von einer Antriebswelle angetrieben werden. Die Umlaufzahnräder weisen hierbei axial voneinander getrennte Bereiche auf, von denen jeweils ein Bereich mit einem der beiden Verstellzahnräder mit Innenverzahnung im Eingriff ist. Indem nunmehr die Zähnezahlen der Innenverzahnungen und/oder die Zähnezahlen der axial voneinander getrennten Außenverzahnungen beziehungsweise Außenverzahnungsbereiche jedes Umlaufzahnrades verschieden sind, weisen das aus der ersten Innenverzahnung und dem ersten Außenverzahnungsbereich gebildete erste Innenradpaarsystem und das aus der zweiten Innenverzahnung und dem zweiten Außenverzahnungsbereich gebildete zweite Innenradsystem unterschiedliche Übersetzungen auf. Da auf jedem der Umlaufzahnräder ein erster Außenverzahnungsbereich und zweiter Außenverzahnungsbereich starr miteinander gekoppelt sind, werden die Verstellzahnräder mit Innenverzahnung zu einer Relativverdrehung gezwungen.

Indem der Unterschied der Zähnezahlen der Innenverzahnungen beziehungsweise der Außenverzahnungsbereiche im Verhältnis zu den Zähnezahlen relativ gering gewählt wird, kann bei einer größeren Drehbewegung der Welle aufgrund des relativ geringen Zähnezahlunterschiedes eine sehr geringe Verdrehung der Verstellzahnräder zueinander erreicht werden, was zu einer hohen Untersetzung führt. Somit können als Antrieb schnelllaufende Motoren mit geringem Drehmoment verwendet werden, wobei aufgrund der hohen Untersetzung eine kleine, genau positionierbare Verdrehung mit relativ hohem Drehmoment erreicht werden kann.

Somit kann mit wenigen, kostengünstig herstellbaren Teilen (im Wesentlichen Zahnrädern mit Innenverzahnung beziehungsweise Außenverzahnung) eine leichtgängige, kleine Verstellvorrichtung mit geringer Masse verwirklicht werden, die dennoch robust ist, große Drehmomente übertragen kann und eine präzise Positionsverstellung gewährleistet, in jeder Position fest klemmt und eine geringe Reibung aufweist. Die Verstellvorrichtung ist hierbei leicht zu montieren und einfach zu handhaben.

Die Verstellvorrichtung kann hierbei auf unterschiedliche Weise eingesetzt werden. Beispiele sind unter anderem eine manuell betätigbare Verstellvorrichtung für zum Beispiel eine Sitzlehnenverstellung. Hierbei wird erfindungsgemäß keine exzentrische Verstellung der Sitzlehne entlang einer Taumelbahn, sondern eine Verdrehung um die Achse der Welle erreicht, so dass eine gute, genaue und bequeme Positionierung der Sitzlehne möglich ist, ohne dass nachfolgend die Position des Sitzes in vertikaler oder horizontaler Richtung erneut korrigiert werden muss. Weiterhin steigt die Festigkeit von der Konstruktion bei Verwendung von mehreren Umlaufzahnrädern, so dass die Sitzlehne hohe Kräfte übertragen kann. Somit können hohe Kräfte beziehungsweise Drehmomente aufgenommen werden, zum Beispiel bei Unfallaufprällen oder zur Befestigung von Sicherheitsgurten an der Sitzlehne.

Vorteilhafterweise hat hierbei das an der Sitzlehne befestigbare zweite Verstellzahnrad eine kleinere Zähnezahl als das an dem Sitzunterbau befestigbare erste Verstellzahnrad, da hierbei die Drehrichtung der Welle der Drehrichtung der Sitzlehne entspricht, was zu einer höheren Benutzerfreundlichkeit führt. Es ist jedoch ein umgekehrter Aufbau möglich, bei dem das Verstellzahnrad mit kleinerer Zähnezahl am Sitzunterbau befestigt ist, wodurch eine gegenläufige Betätigung der Welle erfolgt.

Weiterhin können als Antrieb Motoren, insbesondere Elektromotoren, verwendet werden. Aufgrund der hohen Untersetzung können hierbei kostengünstige Motoren mit hohen Drehzahlen verwendet werden. Hiermit können unter anderem Seilzugverstellungen angetrieben werden; weiterhin können Robotergelenke verwirklicht werden, bei dem vorteilhafterweise die Motoren und/oder Verstellvorrichtungen in den Gelenkteilen beziehungsweise Roboterarmteilen untergebracht werden können. Aufgrund der geringen Masse der Verstellvorrichtung und der geringen Masse der verwendbaren, schnelllaufenden Motoren können Robotergelenke mit geringer Masse hergestellt werden, die bei kleineren Robotern größere Lasten bewegen können.

Indem der erste und zweite Außenverzahnungsbereich gleiche Zähnezahlen aufweisen, kann durch eine Differenz der Zähnezahlen der Innenverzahnungen eine hohe Untersetzung des Verstelldrehmomentes erreicht werden. Damit die erste und zweite Außenverzahnung der Umlaufräder jeweils passend in der ersten beziehungsweise zweiten Innenverzahnung im Eingriff sind, ist zumindest bei einem der Umlaufzahnräder ein Winkelversatz zwischen den beiden Außenverzahnungsbereichen vorteilhaft. Um die Positionsgenauigkeit weiter zu erhöhen, ist es vorteilhaft, eine schräge oder etwas kegelige Verzahnung zu verwenden.

Umlaufzahnräder mit drei oder mehr Außenverzahnungsbereichen können verwendet werden. In diesem Fall sind der erste und zweite Außenverzahnungsbereich jeweils in Eingriff mit der ersten beziehungsweise zweiten Innenverzahnung der entsprechenden Verstellzahnräder, und ein dritter Außenverzahnungsbereich ist im Eingriff mit der als Sonnenrad wirkenden Wellenaußenverzahnung. Auch in diesem Fall sind die mindestens drei Außenverzahnungsbereiche jedes Umlaufzahnrades starr miteinander gekoppelt. Vorzugsweise sind sie aus drei beziehungsweise mehr nebeneinander gesetzten, an axialen Flächen miteinander verbundenen Einzelzahnrädern hergestellt. Durch die Verwendung eines dritten Außenverzahnungsbereiches kann ein gewünschtes Übersetzungsverhältnis zwischen der Welle und den Umlaufzahnrädern hergestellt werden, da dieses Übersetzungsverhältnis durch die Zähnezahlen der Wellenaußenverzahnung und der dritten Außenverzahnungsbereiche eingestellt werden kann, ohne dass hierdurch die Zähnezahlen der ersten und zweiten Außenverzahnungsbereiche festgelegt werden. Somit kann auch ein gewünschter Unterschied in den Zähnezahlen der Innenverzahnungen beziehungsweise der ersten und zweiten Außenverzahnungsbereiche unabhängig von der Einstellung des Übersetzungsverhältnisses zwischen Welle und Umlaufzahnrädern eingestellt werden.

Der dritte Außenverzahnungsbereich kann vorteilhafterweise in der Mitte zwischen den ersten und zweiten Außenverzahnungsbereichen angeordnet sein. Alternativ hierzu können mindestens zwei dritte Außenverzahnungsbereiche vorgesehen werden, die den ersten Außenverzahnungsbereich und den zweiten Außenverzahnungsbereich zwischen sich aufnehmen, sodass eine gleichmäßige Aufnahme des Antriebsdrehmomentes von der Antriebswelle möglich ist. Bei Verwendung von zwei dritten Außenverzahnungsbereichen sind diese jeweils mit der Wellenaußenverzahnung in Eingriff. Hierzu kann die Wellenaußenverzahnung in mehrere versetzte Bereiche unterteilt sein.

Für die Ausbildung eines gewünschten Zähnezahlverhältnisses zwischen dem dritten Außenverzahnungsbereich und der Wellenaußenverzahnung kann der dritte Außenverzahnungsbereich mit einem größeren oder kleineren Radius als die ersten und zweiten Außenverzahnungsbereiche ausgebildet werden. Somit kann ein weiter Bereich von gewünschten Untersetzungsverhältnissen der erfindungsgemäßen Verstellvorrichtung annähernd kontinuierlich durch Einstellung der Zähnezahlverhältnisse zwischen Wellenaußenverzahnung und drittem Außenverzahnungsbereich, sowie den Zähnezahlunterschieden zwischen der ersten Innenverzahnung und zweiten Innenverzahnung und/oder der ersten Außenverzahnung und zweiten Außenverzahnung eingestellt werden.

Aufgrund der ungleichmäßigen Belastung der verschiedenen Außenverzahnungsbereiche entstehen Drehmomente senkrecht zu den Achsen der Umlaufzahnräder, die in Richtung auf eine Verkippung der Umlaufzahnräder wirken. Weiterhin wirken bei hohen Umlaufgeschwindigkeiten Fliehkräfte auf die Umlaufzahnräder, die diese in die Verstellzahnräder drücken können. Um diese Drehmomente und Fliehkräfte abzufangen, ist es vorteilhaft, die Umlaufzahnräder in einem festem Käfig beziehungsweise mehreren festen Käfigen zu lagern. Die Käfige erfassen die Umlaufzahnräder zum Beispiel an den Axialflächen.

Es können anstelle von Käfigen jedoch auch gesonderte Laufflächen auf den Arbeitsteilungsdurchmessern an den axialen Seitenbereichen der Umlaufzahnräder und der Verstellzahnräder vorgesehen werden. Diese Laufflächen ermöglichen eine radiale Abstützung der Umlaufzahnräder an den Verstellzahnrädern, wodurch Verkippungen aufgrund der ungleichmäßigen Belastung und die radialen Fliehkräfte abgefangen werden. Die Laufflächen rollen hierbei aneinander ab.

Die Umlaufzahnräder können aus zwei beziehungsweise drei oder mehr miteinander axial verbundenen Einzelrädern hergestellt werden. Die Einzelräder können miteinander verkeilt, verschweißt, verklebt oder mittels Schrauben verbunden werden. Weiterhin ist eine einteilige Ausbildung eines Umlaufzahnrades als Spritzgussteil möglich. Die Verstellzahnräder können zum Beispiel als Blechstanzteile, Blechpressteile oder Spritzgussteile ausgeführt werden.

Indem eines der Verstellzahnräder gehäusefest angebracht ist und das andere Verstellzahnrad mit einer Abtriebswelle verbunden ist, kann ein Getriebe mit hoher Untersetzung verwirklicht werden. Bei Verwendung von Umlaufrädern mit gleichen Zähnezahlen und Innenverzahnungen mit unterschiedlichen Zähnezahlen kann ein Getriebe ohne Drehrichtungsumkehr verwirklicht werden, indem das Verstellzahnrad mit der Innenverzahnung mit geringerer Zähnezahl gehäusefest angebracht wird, so dass durch die Relativverdrehung der Antriebswelle zu dem Gehäuse eine Verdrehung des zweiten Verstellzahnrades gegenüber dem Gehäuse mit gleicher Drehrichtung bewirkt wird.

Die Umlaufzahnräder und gegebenenfalls das Antriebszahnrad können von einem Führungsrad mit entsprechenden Ausnehmungen, das auf die Welle gesteckt ist, aufgenommen werden. Das Führungsrad kann hierbei an seiner radialen Außenfläche an einer oder beiden Innenverzahnungen abgleiten, wodurch eine gute, zuverlässige und einfache Lagerung der Achse und der Umlaufzahnräder erreicht wird. Dieses Führungsrad kann ebenfalls als Pressteil oder Stanzteil, insbesondere als Blechpressteil, ausgeführt werden.

Die Verstellzahnräder können vorteilhafterweise als tiefgepresste Zahnräder ausgeführt werden, bei denen der innere Bereich nicht ausgestanzt, sondern lediglich in axialer Richtung tiefgepresst ist, so dass sich eine einfache, dichte axiale Abdeckung des Verstellzahnrades ergibt.

Zusätzlich können axiale Abdeckungen, zum Beispiel ebenfalls durch Pressteile oder Stanzteile vorgesehen werden.

Eine Drehbewegung kann anstelle oder zusätzlich zu der Drehbewegung der Welle direkt über die Achsen der Umlaufzahnräder erreicht werden. Hierbei kann zum Beispiel ein Antriebsrad in Löcher der Umlaufzahnräder eingreifen und somit eine direkte Verstellung der Umlaufzahnräder in den Verstellzahnrädern erreichen. Somit kann eine Grobverstellung ohne Untersetzung erreicht werden, die für eine schnellere Verstellung durch die bedienende Person hilfreich ist. Die Feineinstellung kann anschließend über die Welle in der oben beschriebenen Weise mit geringem Krafteinsatz beziehungsweise Drehmoment erfolgen. Erfindungsgemäß ist eine Umstellung zwischen der Grobverstellung und der Feinverstellung zum Beispiel durch einen gemeinsamen Drehknopf, der ausgezogen oder eingedrückt wird, und hierbei entweder in die Welle eingreift oder in das Antriebsrad eingreift, möglich.

Zur feineren Übersetzung kann das Antriebsrad für die Grobverstellung von außerhalb über ein außenstehendes Zahnrad und eine Ratsche betätigt werden. Eine derartige Ausbildung ist im allgemeinen jedoch nicht notwendig, da bereits durch die Betätigung der Welle eine hinreichende Untersetzung erreicht wird.

Ein weicher Anlauf und ein weiches Stoppen einer Seilzugverstellvorrichtung kann durch einen Stoßdämpferring gewährleistet werden, der zwischen dem ersten Innenzahnrad und einer gehäuseseitigen Befestigung, zum Beispiel einer gehäuseseitigen Abschlussscheibe angeordnet ist. Dieser Stoßdämpferring kann zum Beispiel Stoßdämpferelemente wie zum Beispiel Gummiklötze aufweisen, die zwischen Vorsprüngen des ersten Innenzahnrades und der gehäuseseitigen Abschlussscheibe derartig angebracht sind, dass eine elastische und/oder dämpfende Verbindung zwischen dem ersten Innenzahnrad und der gehäuseseitigen Abschlussscheibe erreicht wird. Hierbei kann gleichzeitig eine Dichtwirkung mit Hilfe eines einteilig mit Gummiklötzen ausgebildeten Dichtringes erreicht werden.

Erfindungsgemäß wird eine Verstellvorrichtung unter Verwendung von Zahnrädern mit Kegelverzahnungen gebildet. Hierbei kann insbesondere ein kleinbauendes Winkelgetriebe gebildet werden Auch bei dieser Ausführungsform werden zwei Zahnradsysteme ausgebildet, die sich durch einen Unterschied in den Zähnezahlen unterscheiden, wodurch bei kleinen Zähnezahlunterschieden eine sehr hohe Untersetzung erreicht werden kann. Bei dieser Ausführungsform wird zunächst eine relative Verstellung zweier koaxialer Verstellzahnräder mit Kegelverzahnungen erreicht, indem diese von einer gemeinsamen, vorzugsweise gehäuseseitig gelagerten, Antriebswelle mit Antriebskegelverzahnung angetrieben werden. Die Verstellzahnräder weisen hierbei im allgemeinen jeweils mindestens zwei radial zueinander versetzte, vorzugsweise aneinander angrenzende Kegelverzahnungsbereiche auf. Die Antriebskegelverzahnung ist hierbei mit einem Kegelverzahnungsbereich jedes Verstellzahnrades, vorzugsweise dem radial äußeren, in Eingriff. Die Verstellzahnräder sind weiterhin über gemeinsame Umlaufkegelzahnräder miteinander gekoppelt, die jeweils mit dem anderen, vorzugsweise dem radial inneren, Kegelverzahnungsbereich jedes Verstellzahnrades in Eingriff sind. Die Umlaufzahnräder mit Umlaufkegelverzahnungen sind jeweils drehbar auf einem Stift einer zu den Verstellzahnrädern koaxialen Abtriebswelle gelagert. Somit wird ein zum Beispiel radial äußeres Zahnradsystem aus der Antriebskegelverzahnung und den radial äußeren Kegelverzahnungsbereichen und ein zum Beispiel radial inneres Zahnradsystem aus den Umlaufkegelverzahnungen der Umlaufzahnräder und den radial inneren Kegelverzahnungsbereichen gebildet. Diese beiden radial zu einander versetzten, koaxialen Zahnradsysteme sind über die Verstellzahnräder miteinander gekoppelt. Falls die Kegelverzahnungen der beiden Verstellzahnräder gleich wären, würden die Umlaufzahnräder somit lediglich als Gelegeräder dienen und keine Umlaufbewegung durchführen.

Erfindungsgemäß weisen bei dieser Ausführungsform die beiden inneren Kegelverzahnungsbereiche und/oder die beiden äußeren Kegelverzahnungsbereiche unterschiedliche Zähnezahlen auf. Dies kann vorteilhafter Weise und kostengünstig erreicht werden, indem ein Verstellzahnrad mit unterschiedlichen Kegelverzahnungsbereichen und das andere Verstellzahnrad mit einheitlicher Kegelverzahnung hergestellt wird.

Hierdurch werden die beiden Zahnradsysteme zu einem unterschiedlichen Drehverhalten gezwungen. Die Umlaufzahnräder werden aufgrund des Zähnezahlunterschiedes hierbei gegenüber der Antriebswelle zu einem Umlauf um die gemeinsame Achse beider Zahnradsysteme gezwungen. Da die Umlaufzahnräder über die Stifte an der Abtriebswelle angebracht sind, wird die Abtriebswelle gedreht.

Indem der Unterschied der Zähnezahlen der inneren und/oder äußeren Kegelverzahnungsbereiche im Verhältnis zu den Zähnezahlen relativ gering gewählt wird, kann bei einer größeren Drehbewegung der Antriebswelle eine geringe Umlaufbewegung der Umlaufzahnräder und somit eine geringe Drehbewegung der Abtriebswelle erreicht werden. Hierdurch wird eine hohe Untersetzung erreicht. Somit können als Antrieb schnell laufende Motoren mit geringem Drehmoment verwendet werden, wobei aufgrund der hohen Untersetzung eine kleine, genau positionierbare Verdrehung mit relativ hohem Drehmoment erreicht werden kann. Hierbei können zum Beispiel bei Zähnezahlen der Kegelverzahnungsbereiche im Bereich von 30 bis 40, einem Zähnezahlunterschied der Kegelverzahnungsbereiche eines Verstellzahnrades von 1 oder 2 und Zähnezahlen der Antriebskegelverzahnung und der Umlaufkegelverzahnungen von 10 bis 20 zum Beispiel Untersetzungen von über 50, vorzugsweise über 100, zum Beispiel im Bereich von 150 bis 200, erreicht werden.

Neben dem Abtrieb über die als Steg des Umlaufgetriebes wirkende Abtriebswelle ist grundsätzlich auch ein weiterer Abtrieb von einem oder beiden Verstellzahnrädern möglich. Von den Verstellzahnrädern können hierbei Abtriebe mit unterschiedlichen Drehrichtungen genommen werden.

Somit kann mit wenigen, kostengünstig herstellbaren Teilen (im Wesentlichen einige Kegelzahnräder) eine leichtgängige, kleinbauende Verstellvorrichtung mit geringer Masse verwirklicht werden, die dennoch robust ist, große Drehmomente übertragen kann und eine präzise Positionsverstellung gewährleistet, vorzugsweise in jeder Position fest hemmt, und eine geringe Reibung aufweist. Die Verstellvorrichtung ist hierbei leicht zu montieren und einfach zu handhaben. Dieses kleinbauendes Winkelgetriebe weist gegenüber einem herkömmlichen Schneckengetriebe vorteilhafter Weise eine höhere Untersetzung und einen höheren Wirkungsgrad auf.

Die Kegelverzahnungsbereiche und/oder die Umlaufkegelverzahnungen und/oder die Antriebskegelverzahnung weisen hierbei vorteilhafter Weise eine Palloidalverzahnung auf.

Die erfindungsgemäße Verstellvorrichtung gemäß allen Ausführungsformen kann insbesondere ohne besondere Schmierung auskommen; es ist jedoch eine zusätzliche Schmierung grundsätzlich möglich.

Die Erfindung wird im Folgenden anhand der beiliegenden Zeichnungen an einigen Ausführungsformen näher erläutert. Es zeigen:
- Fig. 1: eine Explosionsdarstellung einer beispielhaften Verstellvorrichtung zur Erleichterung des Verständnisses der Erfindung;
- Fig. 2: eine perspektivische Darstellung einer erfindungsgemäßen Verstellvorrichtung gemäß einer Ausführungsform der Erfindung;
- Fig. 3: eine teilweise in axialer Richtung auseinander gezogene Darstellung der Verstellvorrichtung von Figur 12 mit teilweise aufgebrochenem Gehäuse;
- Fig. 4a, b: eine Draufsicht und Seitenansicht eines ersten Verstellzahnrades und der Antriebswelle mit Antriebskegelzahnrad;
- Fig.5: eine Draufsicht entsprechend Figur 14 mit Abtriebswelle und Umlaufzahnrädern;
- Fig. 6a, b: einen Axialschnitt und eine Seitenansicht einer Abtriebswelle mit Stiften und aufgesetzten Umlaufzahnrädern.

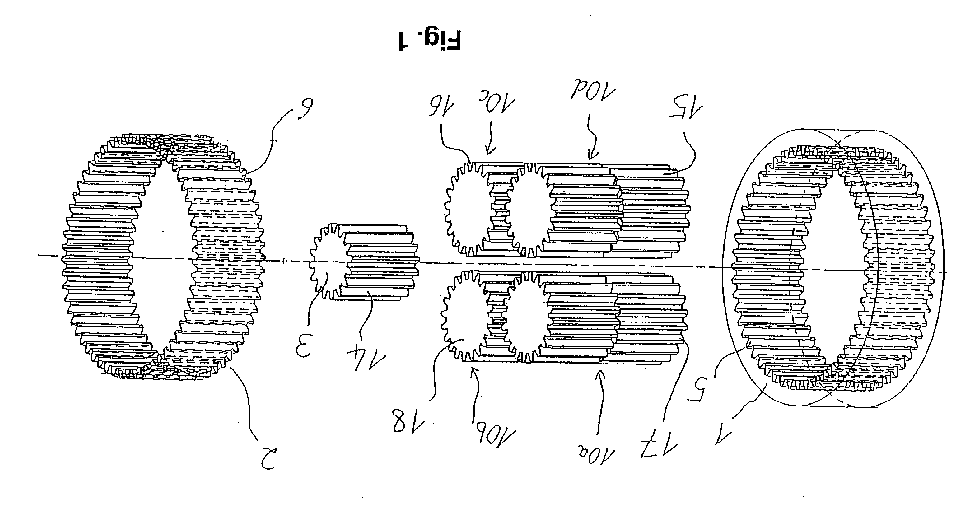

Gemäß Fig. 1 weist eine Verstellvorrichtung gemäß eines ersten Erläuterungsbeispiels ein erstes Verstellzahnrad 1 mit einer ersten Innenverzahnung 5 und ein in axialer Richtung hierzu versetztes zweites Verstellzahnrad 2 mit einer zweiten Innenverzahnung 6 auf.

Konzentrisch zu den Verstellzahnrädern 1, 2 ist eine Antriebswelle 3 mit einer Wellenaußenverzahnung 14 angeordnet. Um die Achse herum sind Umlaufzahnräder 10 a, 10 b, 10 c und 10 d verteilt angeordnet. Jedes Umlaufzahnrad 10 a bis 10 d ist jeweils aus zwei Einzelzahnrädern 17, 18 gefertigt, die an ihren axialen Stirnflächen miteinander verbunden, zum Beispiel verklebt, verschweißt, verschraubt oder verkeilt sind. Sie können auch als Spritzgussteile miteinander verbunden sein. Somit weist jedes zusammengesetzte Umlaufzahnrad 10 a bis 10 d zwei axial zueinander versetzte, in dieser Ausführungsform direkt aneinander grenzende Außenverzahnungsbereiche auf. Hierbei sind die Umlaufzahnräder derartig in den Verstellzahnrädern 1, 2 angeordnet, dass ein erster Außenverzahnungsbereich 15 jedes Umlaufzahnrades in Eingriff mit der ersten Innenverzahnung 5 ist und somit ein Innenradpaar gebildet wird. Zweite Außenverzahnungsbereiche 16 jedes Umlaufzahnrades sind in Eingriff mit der zweiten Innenverzahnung 6 und bilden somit ein zweites Innenradpaar. Die Wellenaußenverzahnung 14 kann in Eingriff mit entweder den ersten Außenverzahnungsbereichen 15 oder den zweiten Außenverzahnungsbereichen 16 sein.

Hierbei unterscheiden sich entweder die Zähnezahlen der ersten Außenverzahnungsbereiche 15 und der zweiten Außenverzahnungsbereiche 16, und/oder es unterscheiden sich die Zähnezahlen der ersten Innenverzahnung 5 und der zweiten Innenverzahnung 6.

Die Einzelzahnräder 17 und 18, die jeweils zu einem Umlaufzahnrad 10 a bis 10 d zusammengesetzt sind, weisen gleiche Arbeitsteilungsdurchmesser auf. Somit wird eine Kopplung der beiden Innenradpaare über die zusammengesetzten Umlaufzahnräder 10 a bis 10 d erreicht, während die Verstellzahnräder 1, 2 zueinander verdrehbar sind.

Bei dem in Fig. 1 gezeigten Beispiel unterscheiden sich die Zähnezahlen der ersten Außenzahnungsbereiche 15 und der zweiten Außenverzahnungsbereiche 16. Die Wellenaußenverzahnung 14 - die als Sonnenrad in dem Umlaufgetriebe wirkt, ist in Eingriff mit den zweiten Außenverzahnungsbereichen 16, die wiederum in Eingriff mit der zweiten Innenverzahnung 6 sind.

Hierbei kann zum Beispiel die Wellenaußenverzahnung 16 Zähne, die ersten Außenverzahnungsbereiche jeweils 18 Zähne und die zweiten Außenverzahnungsbereiche jeweils 20 Zähne aufweisen. Die Innenverzahnungen können gleiche Zähnezahlen von zum Beispiel Z=51 aufweisen. Weiterhin ist es möglich, dass die Zähnezahlen der ersten Innenverzahnungen 5, 6 ungleich sind. Hierbei kann zum Beispiel die Zähnezahl der Innenverzahnung 51 betragen und die Zähnezahl der zweiten Innenverzahnung 56 betragen.

Bei Betätigung der Welle 3 führen die Umlaufzahnräder 10 a bis d eine Umlaufbewegung in beiden Verstellzahnrädern durch, wodurch aufgrund der unterschiedlichen Zähnezahlen der Außenverzahnungsbereiche eine Relativverdrehung der Verstellzahnräder zueinander erzwungen wird.

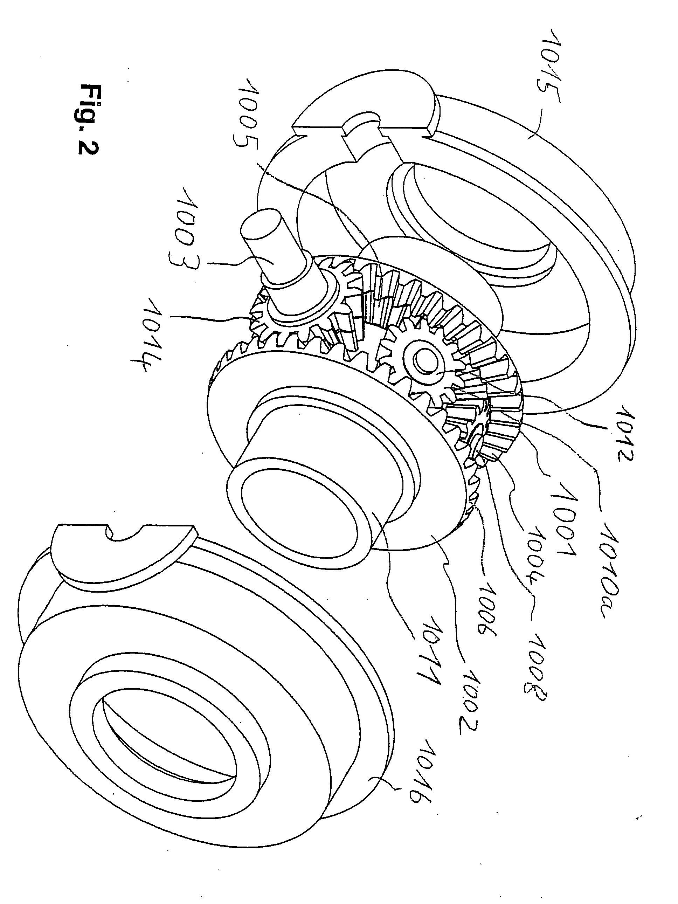

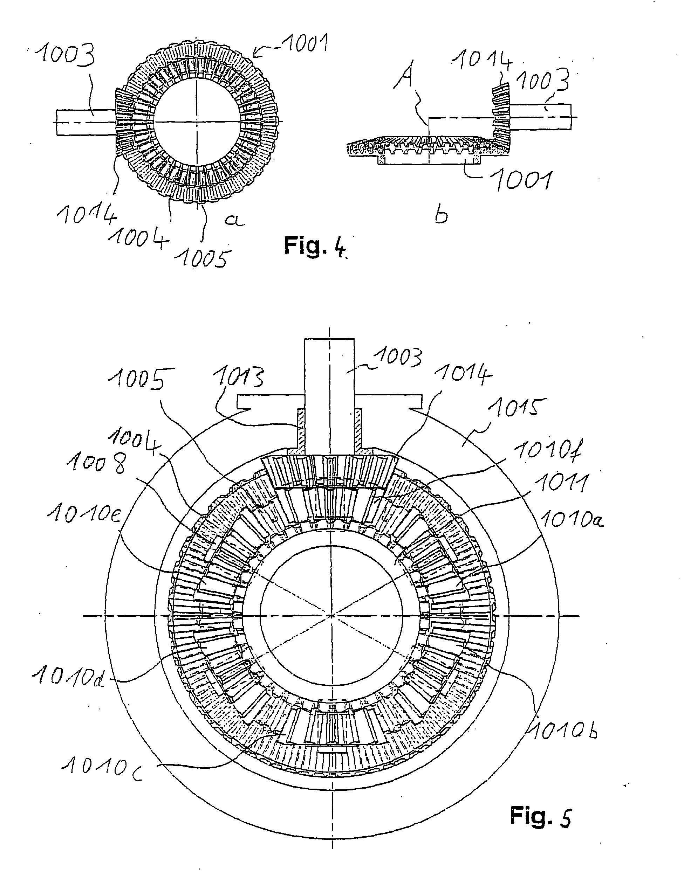

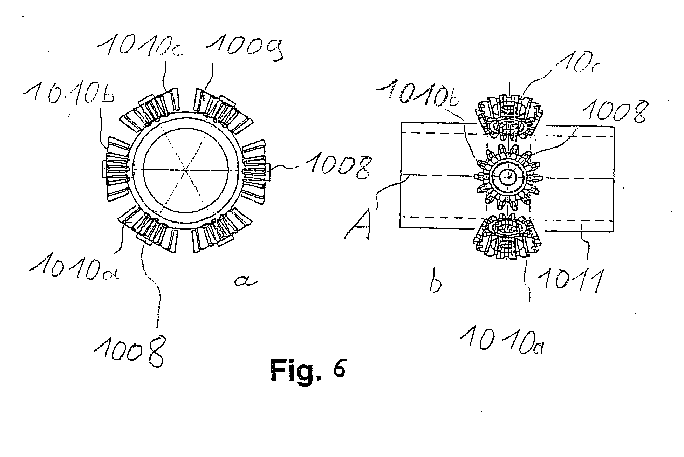

Gemäß der Ausführungsform der Figuren 2 bis 6 weist ein erstes Verstellzahnrad 1001 eine erste Kegelverzahnung auf, die in einen ersten radial äußeren Kegelverzahnungsbereich 1004 und einen ersten radial inneren Kegelverzahnungsbereich 1005 unterteilt ist. Ein zweites Verstellzahnrad 1002 weist entsprechend eine zweite Kegelverzahnung mit einem zweiten radial äußeren Kegelverzahnungsbereich 1006 und einem zweiten radial inneren Kegelverzahnungsbereich 1007 auf. In dieser Ausführungsform weisen die beiden zweiten Kegelverzahnungsbereiche 1006, 1007 gleiche Zähnezahlen auf und sind als einheitlicher zweiter Kegelverzahnungsbereich ausgebildet. Die beiden Verstellzahnräder sind auf einer gemeinsamen Achse A mit einander zugewandten Kegelverzahnungsbereichen angeordnet.

Auf einer gehäuseseitig gelagerten Antriebswelle 1003 ist eine Antriebskegelverzahnung 1004 ausgebildet ist, zum Beispiel durch ein auf die Antriebswelle aufgesetztes Antriebskegelzahnrad. Die Antriebswelle 1003 ist hierbei rechtwinklig zu der Achse A der beiden Verstellzahnräder angeordnet. Die Antriebskegelverzahnung ist mit den beiden radial äußeren Kegelverzahnungsbereichen 1004, 1006 in Eingriff und bildet mit diesen ein radial äußeres Zahnradsystem.

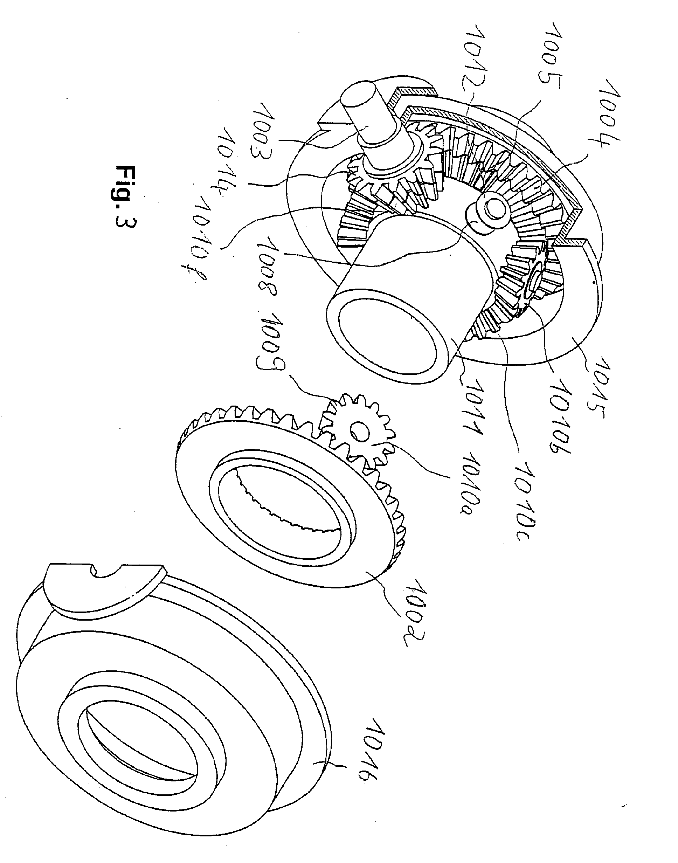

Eine Abtriebswelle 1011 ist koaxial mit den beiden Verstellzahnrädern 1001, 1002 angeordnet und kann sich beispielsweise wie in den **Figuren 2, 3** gezeigt durch beide Verstellzahnräder hindurch erstrecken. An der Abtriebswelle 1011 sind zum Beispiel sechs radial nach außen abstehende Stifte 1008 angebracht, die vorteilhafter Weise gleichmäßig in Umfangsrichtung beabstandet sind. Auf den Stiften 1008 sind Umlaufzahnräder 1010 a-f drehbar gelagert und radial nach außen durch Sicherungsscheiben 1012 verliersicher gehalten. Die Umlaufzahnräder weisen Umlaufkegelverzahnungen 1009 auf, die mit den beiden radial inneren Kegelverzahnungsbereichen 1005, 1007 der Verstellzahnräder in Eingriff sind und ein radial inneres Zahnradsystem bilden. Hierbei ist in den Figuren 2, 3, 5 zufälliger Weise eine Position des Umlaufzahnrades 1010 f gezeigt, bei der dieses koaxial mit der Antriebswelle 1003 liegt, so dass die Antriebskegelverzahnung 1014 und die Umlaufkegelverzahnung 1009 fluchten; die Antriebswelle 1003 und die Umlaufzahnräder 1010 a-f sind jedoch in radialer Richtung der Achse Verstellzahnräder getrennt und nicht miteinander verbunden.

Ein erstes Gehäuseteil 1015 und ein zweites Gehäuseteil 1016 umgeben die erfindungsgemäße Verstellvorrichtung und weisen Auslassöffnungen für die Antriebswelle 1003 und die Abtriebswelle 1011 auf, die ergänzend zum Beispiel durch Dichtungen abgedichtet sein können.

Erfindungsgemäß weisen die beiden radial inneren Kegelverzahnungsbereiche 1005, 1007 und/oder die beiden radial äußeren Kegelverzahnungsbereiche 1004, 1006 unterschiedliche Zähnezahlen auf. Bei der gezeigten Ausführungsform sind die beiden zweiten Kegelverzahnungsbereiche 1006, 1007 als einheitliche Kegelverzahnung mit gleicher Zähnezahl, und die beiden ersten Kegelverzahnungen 1004, 1005 mit unterschiedlichen Zähnezahlen ausgebildet. Hierbei können zum Beispiel die Zähnezahlen des ersten radial inneren Kegelverzahnungsbereiches 1005 und der zweiten Kegelverzahnungsbereiche 1006, 1007 gleich sein, oder aber es können die Zähnezahlen des ersten radial äußeren Kegelverzahnungsbereiches 1004 und der zweiten Kegelverzahnungsbereiche 1006, 1007 gleich sein.

Die Verstellzahnräder 1001, 1002 führen gegenüber der zwischen ihnen liegenden, gehäuseseitig gelagerten Antriebswelle 1003 eine gegenläufige Drehbewegung durch. Falls die Zähnezahlen der beiden äußeren Kegelverzahnungsbereiche gleich sind, drehen die Verstellzahnräder gegensinnig mit gleicher Drehzahl. Sind diese Zähnezahlen ungleich, dreht das Verstellzahnrad, dessen äußerer Kegelverzahnungsbereich eine größere Zähnezahl aufweist, entsprechend langsamer. Weiterhin führen die Umlaufzahnräder 1010 a-f gegenüber der zwischen ihnen liegenden Antriebswelle 1003 eine gegenläufige Drehbewegung durch. Bei gleichen Zähnezahlen der beiden inneren Kegelverzahnungsbereiche 1005, 1007 drehen die Verstellzahnräder 1001, 1002 auch gegenüber den Umlaufzahnrädern gegensinnig mit gleicher Drehzahl, bei einer ungleichen Zähnezahl drehen sie entsprechend unsymmetrisch.

Würden die beiden inneren Kegelverzahnungsbereiche gleiche Zähnezahlen aufweisen und die beiden äußeren Kegelverzahnungsbereiche gleiche Zähnezahlen aufweisen, würden die Umlaufzahnräder - wie die Antriebswelle - lediglich als Gelegeräder um ihre eigenen Achsen rotieren und somit keine Umlaufbewegung um die Achse A durchführen. Aufgrund des genannten unsymmetrischen Zähnezahlunterschiedes zwischen den beiden inneren und/oder den beiden äußeren Kegelverzahnungsbereichen werden die Umlaufzahnräder jedoch zu einer Umlaufbewegung um die Achse A gezwungen.

Eine hohe Untersetzung kann nunmehr durch einen geringen Zähnezahlunterschied bewirkt werden, der insbesondere 1 oder 2 betragen kann.

Es ergeben sich für folgende Zähnezahlen z9 der Umlaufzahnräder, z14 der Antriebsverzahnung und z4, z5, z6, z7 der betreffenden Kegelverzahnungsbereiche 1004, 1005, 1006, 1007 und z9=z14 folgende Untersetzungen i:
Mit z9=14, z4=37, z5=36, z6=z7=36 eine Untersetzung von ca. i=190,
Mit z9=14, z4=36, z5=35, z6=z7=35 eine Untersetzung von ca. i=180,
Mit z9=14, z4=35, z5=34, z6=z7=34 eine Untersetzung von ca. i=170,
Mit z9=14, z4=36, z5=34, z6=z7=34 eine Untersetzung von ca. i=93,
Mit z9=14, z4=36, z5=34, z6=34, z7=35 eine Untersetzung von ca. i=60.

## Patentansprüche

1. Verstellvorrichtung, mit
• einem ersten Verstellzahnrad (1001) und einem zweiten Verstellzahnrad (1002),wobei das erste Verstellzahnrad (1001) mindestens einen ersten radial äußeren Kegelverzahnungsbereich (1004) und einen ersten radial inneren Kegelverzahnungsbereich (1005) aufweist und das zweite Verstellzahnrad (1002) mindestens einen zweiten radial äußeren Kegelverzahnungsbereich (1006) und einen zweiten radial inneren Kegelverzahnungsbereich (1007) aufweist,
• einer Antriebswelle (1003) mit einer Antriebskegelverzahnung (1014), die in Eingriff mit dem ersten und zweiten radial äußeren Kegelverzahnungsbereich (1004, 1006) der Verstellzahnräder (1001, 1002) ist, und
• einer Abtriebswelle (1011), die konzentrisch zu den Verstellzahnrädern (1001, 1002) angeordnet ist und radial nach außen abstehende Stifte (1008) aufweist, auf denen mindestens zwei Umlaufzahnräder (1010 a-f) drehbar auf Stiften (1008) gelagert sind, wobei die Umlaufzahnräder (1010 a-f) Umlaufkegelverzahnungen (1009) aufweisen, die mit den radial inneren Kegelverzahnungsbereichen (1005, 1007) in Eingriff sind,
**dadurch gekennzeichnet, dass**
• die ersten Kegelverzahnungsbereiche (1004, 1005) unterschiedliche Zähnezahlen und die zweiten Kegelverzahnungsbereiche (1006, 1007) gleiche Zähnezahlen aufweisen und die radial inneren oder radial äußeren Kegelverzahnungsbereiche (1005, 1007; 1004, 1006) gleiche Zähnezahlen aufweisen und
• der zweite radial innere Kegelverzahnungsbereich (1007) und der zweite radial äußere Kegelverzahnungsbereich (1006) als eine einheitliche zweite Kegelverzahnung ausgebildet sind.

2. Verstellvorrichtung nach Anspruch 1, **dadurch gekennzeichnet, dass** sechs Umlaufzahnräder (1010 a-f) vorgesehen sind.

3. Verstellvorrichtung nach Anspruch 1 oder 2, **dadurch gekennzeichnet, dass** die Kegelverzahnungsbereiche und/oder die Umlaufkegelverzahnungen und/oder die Antriebskegelverzahnung eine Palloidalverzahnung aufweisen.

4. Verstellvorrichtung nach einem der Ansprüche 1 bis 3, **dadurch gekennzeichnet, dass** der Unterschied in den Zähnezahlen der inneren und äußeren ersten Kegelverzahnungsbereiche (1004, 1005) eins beträgt.

5. Verstellvorrichtung nach einem der Ansprüche 1 bis 4, **dadurch gekennzeichnet, dass** die Antriebskegelverzahnung (1014) und die Umlaufkegelverzahnungen (1009) gleiche Zähnezahlen aufweisen.

6. Verstellvorrichtung nach einem der Ansprüche 1 bis 5, **dadurch gekennzeichnet, dass** das Verhältnis der Zähnezahlen der Kegelverzahnungsbereiche (1004, 1005, 1006, 1007) und der Zähnezahlen der Umlaufkegelverzahnung (1009) oder Antriebskegelverzahnung (1014) in einem Bereich von 3:1 1 bis 2:1 liegt.

7. Verstellvorrichtung nach einem der Ansprüche 1 bis 6, **dadurch gekennzeichnet, dass** zumindest eines der beiden Verstellzahnräder (1001, 1002) mit einer zweiten Abtriebswelle verbunden ist.
